# EUROPEAN PATENT SPECIFICATION

(11) **EP 2 145 745 B1**
(45) Date of publication and mention of the grant of the patent: **25.05.2011**
(21) Application number: 09251774.7
(22) Date of filing: 10.07.2009
(51) Int. Cl.: B29C 39/10, F16J 15/32

(54) **A method of forming a brush seal**
Verfahren zum Bilden einer Bürstendichtung
Dispositif de formations de joint à brosse

(30) Priority: 14.07.2008 GB 0812836
(43) Date of publication of application: 20.01.2010
(73) Proprietor: Cross Manufacturing Company (1938) Limited, Devizes Wiltshire SN10 2ET (GB)
(72) Inventor: Bowsher, Aaron, Devizes Wiltshire SN10 3SQ (GB); Jenkins, Matthew Richard, The Butts, Chippenham Wiltshire SN15 3JT (GB)
(74) Representative: Dunlop, Brian Kenneth Charles

(56) References cited:
- EP-A- 1 510 655
- FR-A- 2 824 378
- US-A1- 2008 001 363

## Description

This invention relates to a method of forming brush seals and brush seals.

It is well known to form brush seals which incorporate a back plate and a front plate, which together define an opening, which retain one end of an array of bristles which have been enlarged by welding or other material that also joins the bristles together at that end. Commonly the bristles are clamped at the point intermediate their ends between the two plates. The line between the clamping and free movement of the bristles is commonly called the pinch point. Examples of such arrangements are shown in US-A-2008/001363, EP-A-1510655 and FR-A-2824378. In the first the bristles are secured together at one end using epoxy resin.

The applicants have investigated using epoxy resins to form the enlarged end, because it has several advantages over welding and other such operations.

However, in order to properly anchor the bristles, it is necessary to select the epoxy resin so that it will wick between the bristles prior or during curing. It is also in many instances necessary that the epoxy resin has a high glass transition point (Tg).

Experiments carried out by the applicants have shown that in almost all instances where wicking occurs between the bristles, the epoxy resin also wicks right down the bristles, past the pinch point line, with the result that the bristles are lumped together below the pinch line and the seal cannot deflect and essentially ceases to be a brush seal.

From one aspect the invention consists in a method of forming a brush seal including:
(a) forming a back plate having in general longitudinal alignment a first bristle anchor recess; a second reservoir recess and a land for clamping the bristles;
(b) laying the back plate horizontally and laying a brush of bristles such that one end of the bristles overlies the anchor reservoir and the other extends beyond the land;
(c) locating a mould of the anchor reservoir and filling the mould and the anchor reservoir with an epoxy resin capable of wicking between the bristles;
(d) curing the epoxy resin; and
(e) attaching a front plate to the back plate to clamp the bristles against the land at a pinch point line;
   wherein the dimensions of the second reservoir recess are such that the epoxy resin does not wick beyond the pinch line.

The epoxy resin preferably has an operating temperature of approximately 550°F (288°C) and conveniently the glass transition point for the epoxy resin may be between 500°F (260°C) and 572°F (300°c). The reservoir recess may be between 8mm and 12mm long.

The invention also consists in a brush seal having a back plate and a front plate together defining an anchor opening and a spaced clamp; a set of bristles joined at one end by an enlarged head retained in the opening to secure the bristles and clamped by the front plate intermediate its end at the pinch line; the enlarged head being formed by epoxy resin characterised in that the back plate further includes a reservoir recess for receiving wicked epoxy resin from the bristles and thereby preventing the wicking of resin beyond the pinch line.

Although the invention has been defined above it is to be understood it includes any inventive combination of the features set out above or in the following description.

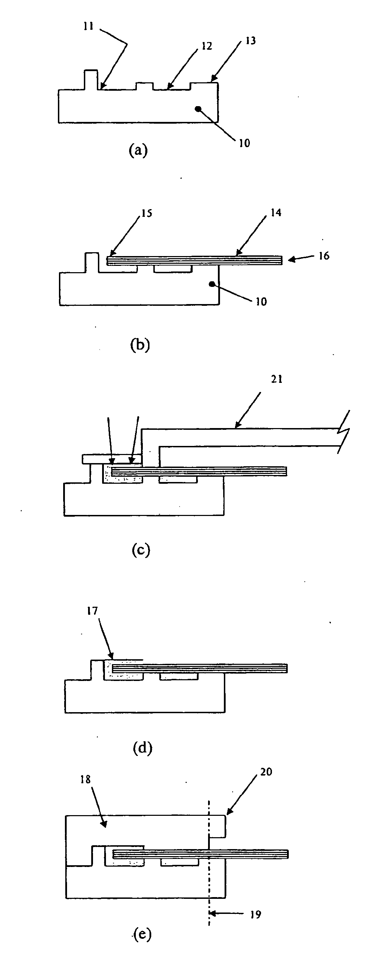

The invention may be performed in various ways and specific embodiments will now be described by way of example with reference to the accompanying drawing which illustrates the method of the invention sequentially.

Thus in Figure a back plate 10 has been formed and laid horizontally. The backplate 10 defines an anchor recess 11 a reservoir recess 12 and a land 13.

In Figure b a bristle pack 14 has been laid on top of the back plate 10 so that one end 15 overlies the recess 11 and the other end 16 projects beyond the land 13.

In Figure c the tufts are clamped in position by clamp 21. Epoxy resin is poured into recess 11 as indicated by the arrows, a mould is introduced over the recess.

Turning to Figure d, the mould has been removed and the epoxy resin cured to form a lump 17 which constitutes a head on the bristles 14. It will be noticed that some epoxy resin has wicked down the bristles but has then fallen under gravity into the recess 12 preventing material wicking beyond the land 13.

In Figure e, a front plate 18 has been assembled onto the back plate capturing the head 17 and clamping the bristles 14 onto the land 13 at the pinch line 19. In use the final brush seal indicated at 20 may be orientated in any desirable manner.

It will be understood that the back plate 16 could take other forms than that which is shown in the drawing and the length of the recess 12 will be determined by the wicking characteristics of the epoxy resin. However in experiments a reservoir of around 10mm in length has proved practical.

## Claims

1. A method of forming a brush seal including:
(a) forming a back plate (10) having, in general longitudinal alignment, a first bristle anchor recess (11); a second reservoir recess (12) and a land (13) for clamping the bristles;
(b) laying the back plate (10) horizontally and laying a brush (14) of bristles such that one end of the bristles (15) overlies the anchor reservoir (11) and the other (16) extends beyond the land (13);
(c) locating a mould on the anchor reservoir (11) and filling the mould and the anchor reservoir (11) with an epoxy resin capable of wicking between the bristles;
(d) curing the epoxy resin; and
(e) attaching a front plate to the back plate (10) to clamp the bristles (14) against the land (13) at a pinch point line (19) wherein the dimensions of the second reservoir recess (12) are such that the epoxy resin does not wick beyond the pinch line.

2. A method as claimed in claim 1 wherein the epoxy resin has an operating temperature of approximately 288°C (550°F)

3. A method as claimed in claim 2 wherein the epoxy resin glass transition temperature may be between 260°C (500°F) and 300°c (572°F).

4. A method as claimed in claim 1 wherein the reservoir recess (12) is between 8mm and 12mm long.

5. A brush seal having a back plate (10) and a front plate together defining an anchor opening (11) and a spaced clamp; a set of bristles joined at one end by an enlarged head (17) retained in the opening to secure the bristles and clamped, by the front plate clamp intermediate its ends at a pinch line (19); the enlarged head (17) being formed by epoxy resin **characterised in that** the back plate (16) further includes a reservoir (12) recess for receiving wicked epoxy resin from the bristles and thereby preventing the wicking of resin beyond the pinch line (19).

## Patentansprüche

1. Verfahren zum Bilden einer Bürstendichtung, umfassend
a) Bilden einer Rückplatte (10), die im allgemeinen in Längsrichtung ausgerichtet ist, einer ersten Borstenverankerungs-Aussparung (11); einer zweiten Becken-Aussparung (12) und eines Feldes (13) zum Festklemmen der Borsten;
b) waagerechtes Ablegen der Rückplatte (10) und Ablegen einer Bürste (14) mit Borsten in der Weise, dass das eine Ende der Borsten (15) Ober dem Verankerungsbecken (11) liegt und sich das andere Ende (16) über das Feld (13) hinaus erstreckt;
c) Anordnen einer Gießform auf dem Verankerungsbecken (11) und Füllen der Gießform und des Verankerungsbeckens (11) mit einem Epoxydharz, das zwischen die Borsten dringen kann;
d) Aushärten des Epoxydharzes; und
e) Anbringen einer Stirnplatte an der Rückplatte (10), um **dadurch** die Borsten (14) gegen das Feld (13) an einer Quetschpunktlinie (19) zu drücken, wobei die Abmessungen der zweiten Beckenaussparung (12) so geartet sind, dass das Epoxydharz nicht über die Quetschlinie hinaustreten kann.

2. Verfahren nach Anspruch 1, **dadurch gekennzeichnet, dass** das Epoxydharz eine Verarbeitungstemperatur von annähernd 288 °C (550 °F) hat.

3. Verfahren nach Anspruch 2, **dadurch gekennzeichnet, dass** die Epoxydharz-Befesügungs-Übergangstemperatur zwischen 260 °C (500 °F) und 300 °C (572 °F) liegen kann.

4. Verfahren nach Anspruch 1, **dadurch gekennzeichnet, dass** die Beckenaussparung (12) zwischen 8 mm und 12 mm lang ist.

5. Bürstendichtung mit einer Rückplatte (10) und einer Stirnplatte, die zusammen eine Verankerungs-Öffnung (11) und eine beabstandete Klammer bilden; ferner mit einem Satz Bürsten, die an dem einen Ende durch einen vergrößerten Kopf (17) verbunden sind, welcher in der Öffnung zurückgehalten wird, um die Bürsten zu befestigen und der festgeklemmt wird, und zwar mit Hilfe der Stimplattenklemmung zwischen ihren Enden, an einer Quetschlinie (19); wobei der vergrößerte Kopf (17) von Epoxydharz gebildet wird, **dadurch gekennzeichnet, dass** die Rückplatte (10) des weiteren eine Beckenvertiefung (12) aufweist, die dazu dient, das von den Bürsten abgegebene Epoxydharz aufzunehmen und **dadurch** zu verhindern, dass das Harz über die Quetschlinie (19) hinaus läuft.

## Revendications

1. Procédé de formation d'un joint à brosse comprenant :
(a) la formation d'une plaque arrière (10) ayant, en alignement globalement longitudinal, une première cavité (11) d'ancrage des soies ; une seconde cavité de réservoir (12) et un appui (13) pour serrer les soies ;
(b) la pose de la plaque arrière (10) horizontalement et la pose d'une brosse (14) de soies de telle sorte qu'une extrémité des soies (15) recouvre le réservoir d'ancrage (11) et que l'autre (16) s'étend au-delà de l'appui (13) ;
(c) la disposition d'un moule sur le réservoir d'ancrage (11) et le remplissage du moule et du réservoir d'ancrage (11) par une résine époxy capable d'un effet mèche entre les soies ;
(d) le durcissement de la résine époxy ; et
(e) la fixation d'une plaque avant à la plaque arrière (10) pour serrer les soies (14) contre l'appui (13) à une ligne de points de pincement (19), les dimensions de la seconde cavité de réservoir (12) étant telles que la résine époxy n'est pas absorbée par effet mèche au-delà de la ligne de pincement.

2. Procédé selon la revendication 1, dans lequel la résine époxy a une température de fonctionnement d'approximativement 288°C, (550°F).

3. Procédé selon la revendication 2, dans lequel la température de transition vitreuse de la résine époxy peut se situer entre 260°C, (500°F) et 300°C, (572°F).

4. Procédé selon la revendication 1, dans lequel la cavité de réservoir (12) a une longueur se situant entre 8 mm et 12 mm.

5. Joint à brosse ayant une plaque arrière (10) et une plaque avant définissant ensemble une ouverture d'ancrage (11) et une pince espacée ; un ensemble de soies reliées à une extrémité par une tête agrandie (17) retenue dans l'ouverture pour fixer les soies et serrées, par la pince de plaque avant, entre ses extrémités, à une ligne de pincement (19) ; la tête agrandie (17) étant formée en résine époxy, **caractérisé par le fait que** la plaque arrière (16) comprend en outre une cavité de réservoir (12) destinée à recevoir une résine époxy absorbée par effet mèche à partir des soies et à empêcher ainsi l'absorption de la résine par effet mèche au-delà de la ligne de pincement (19).
